# EUROPÄISCHE PATENTANMELDUNG

(11) **EP 1 170 905 A2**
(43) Veröffentlichungstag der Anmeldung: **09.01.2002**
(21) Anmeldenummer: 01104140.7
(22) Anmeldetag: 21.02.2001
(51) Int. Cl.: H04L 12/56

(54) **Vorrichtung zum Auswählen von Diensten und Internetprovidern für Breitbandanwendungen**

(30) Priorität: 09.03.2000 DE 10011527
(71) Anmelder: SIEMENS AKTIENGESELLSCHAFT, 80333 München (DE)
(72) Erfinder: Hnyk, Rüdiger, 61118 Bad Vibel (DE); Krupp, Johannes, 83043 Bad Aibling (DE)

(57) **Zusammenfassung**

Beim Stand der Technik werden Breitband-Endgeräte über einen zugeordneten Router dem Internet zugeführt. Zwischen Router und Internet sind Selection-Server zum Auswählen von Diensten (Service Selection) eingebunden, über die der gesamte Verkehr zum Internet abgewickelt wird. Problematisch hieran ist, dass der Selection-Server im Kommunikationspfad zum Internet angeordnet ist, womit die Dynamik des Zuganges vermindert ist. Die Erfindung schafft hier Abhilfe, indem der Selection-Server parallel zum Router angeordnet ist, wodurch er dem Pfad zwischen Router und Internet entnommen ist.

## Beschreibung

Vorrichtung zum Auswählen von Diensten und Internetprovidern für Breitbandanwendungen.

Die Erfindung betrifft eine Vorrichtung gemäß dem Oberbegriff von Patentanspruch 1.

Beim Stand der Technik werden die Endgeräte eines Breitbandteilnehmers über ein Kommunikationssystem einem Router zugeführt. Hierbei ist das Kommunikationssystem als Teil einer Telefonvermittlungsstelle anzusehen und bildet den Abschluß bis Ebene 2. Dem Kommunikationssystem ist ein Router nachgeschaltet. Zwischen Kommunikationssystem und Router sind noch weitere Netzeinheiten eines Access Networks angeordnet. In die Verbindungen zwischen Router und Internet sind Selection-Server eingebunden. Der Selection-Server hat die Aufgabe, den vom Teilnehmer gewünschten Dienst (Service Selection) auszuwählen. Hierzu ist hier Trunkauswahl, Pfadauswahl (z. B. bei ATM/FR VC oder MPLS - Verbindungen) oder Adressenauswahl (z.B. anhand der IP-Zieladresse) sowie die Vergebührung des Endteilnehmers vorzunehmen.

Problematisch an einer derartigen Anordnung ist, dass der Selection-Server im Kommunikationspfad zum Internet angeordnet ist. Dies bedeutet, dass eine Mehrzahl von Teilnehmern über ein- und denselben Selection-Server zum Internet durchgeroutet werden. Damit besteht aber die Gefahr, dass der Selection-Server einen Flaschenhals darstellt und die Dynamik des Zuganges vermindert ist.

Der Erfindung liegt die Aufgabe zugrunde, eine Netzkonfiguration anzugeben, mit der die Dynamik des Zugangs zum Internet für alle Endteilnehmer erhöht wird.

Die Erfindung wird ausgehend vom Oberbegriff von Patentanspruch 1 durch die im kennzeichnenden Teil angegebenen Merkmale gelöst.

Vorteilhaft an der Erfindung ist insbesondere, den Selection-Server komplett aus dem Pfad herauszunehmen und dem Router nebenzuordnen. Damit ist eine Entkopplung zwischen Router und Server vorgenommen.

Vorteilhafte Weiterbildungen der Erfindung sind in den Unteransprüchen angegeben.

Die Erfindung wird im folgenden anhand eines figürlich dargestellten Ausführungsbeispiels näher erläutert.

Es zeigen:
- Figur 1: die Netzstruktur gemäß der Erfindung,
- Figur 2: das zwischen Router und Selection-Server auszutauschende Protokoll.

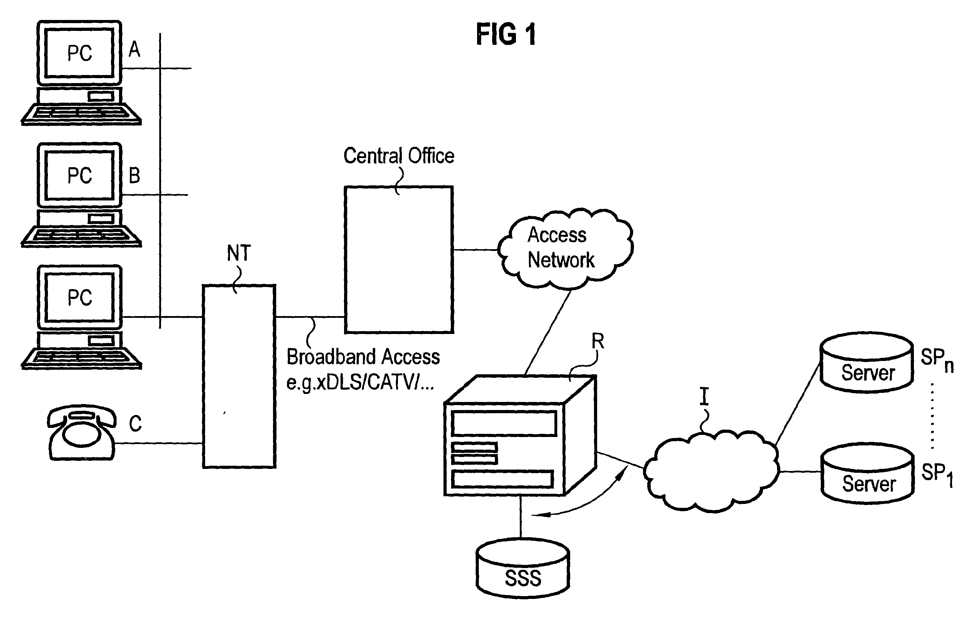

In Fig. 1 sind Teilnehmer A, B, C offenbart, die über einen gemeinsamen Bus an eine Netzabschlußvorrichtung NT angeschlossen sind. Alle Teilnehmer besitzen als Endgerät einen Personal Computer PC. Die Netzabschlußvorrichtung NT ist über einen Breitbandzugang an ein Kommunikationssystem angeschlossen. Dieses terminiert alle Teilnehmer bis Ebene 2. Die von den Teilnehmern A, B, C ausgehenden Verbindungen werden logisch von einem Router R terminiert (Ebene 3), der über weitere Netzkomponenten eines Access Netzwerkes an das Kommunikationssystem angeschlossen ist.

Der Router R weist nun eine direkte Verbindung zu dem Selection-Server SSS (Service Selection Server) auf. Dieser ist dem Router R nebengeordnet. Weiterhin steht der Router R direkt über Verbindungen mit dem Internet I in Verbindung. Dort sind weitere Server angeordnet, auf denen beispielsweise Video-Filme gespeichert sind. Diese werden von Service-Providern SP₁ ... SP_{N} betrieben.

Wenn nun die Teilnehmer A, B, C Verbindungen zum Internet I aufnehmen, um z. B. den Film eines Video-Providers zu betrachten, wird zunächst die Verbindung zum Router R aufgebaut. Dieser übergibt dem Selection-Server SSS Informationen in einem Protokoll P, mit dessen Hilfe letzterer Trunkauswahl, Pfad- sowie Adressenauswahl und Vergebührung ermittelt. Im folgenden werden dann die entsprechenden Verbindungen zum Internet I zu den Service-Providern SP₁...SP_{N} durchgeschaltet. Der Selection-Server SSS ist damit aus dem Pfad entnommen, wodurch kein Flaschenhals für die Teilnehmer mehr vorhanden ist. Die Übertragungsvorgänge vom und zum Internet I werden damit beschleunigt.

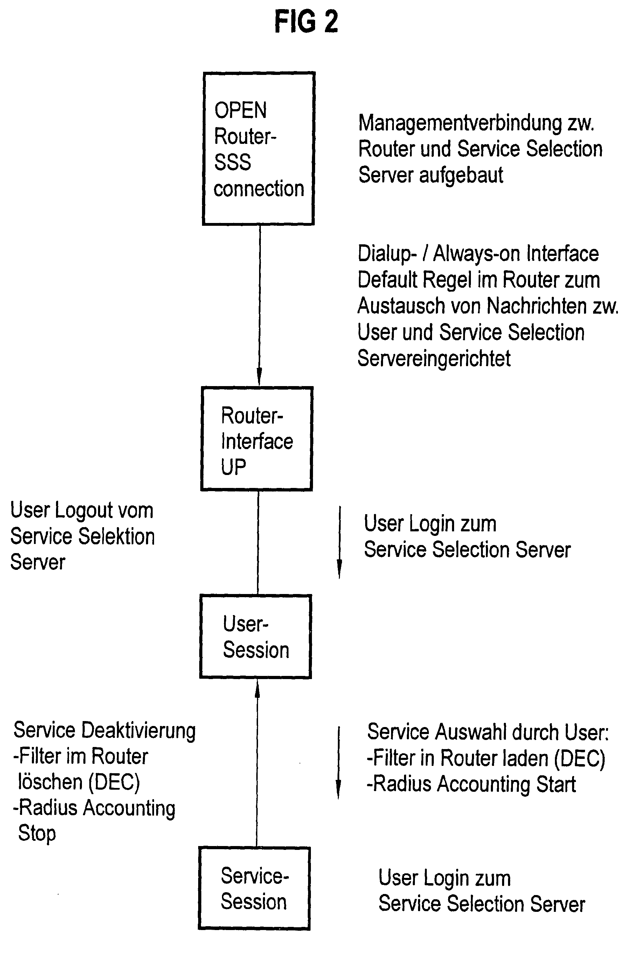

In Fig. 2 ist das zwischen Router und Selection-Server auszutauschende Protokoll offenbart. Ein Teilnehmer, der die Dienste eines oder mehrerer Service-Provider SP₁ ... SP_{N} in Anspruch nehmen will, meldet sich zunächst über den Router R beim Selection-Server SSS an. Dieser prüft (z.B. anhand einer Datenbank), welche der Service-Provider SP₁ ... SP_{N} es gibt und teilt dies dem Teilnehmer mit. Dieser kann dann einen oder mehrere der Service-Provider SP₁ ... SP_{N} auswählen und dies dem Selection-Server SSS über den Router R mitteilen. Der Selection-Server SSS entscheidet dann, ob er das Erstellen einer Verbindung zum Service-Provider SPₓ akzeptiert oder nicht. Daraufhin werden die benötigten Datenstrukturen (Filter Regeln) in einer Decisionmeldung (DEC) an den Router R gegeben und die entsprechenden Regeln auf dem Router R aktiviert. Der Erfolg dieser Aktion wird vom Router R mit einer Reportmeldung (RPT) an den Selection-Server SSS quittiert.

Wenn der Teilnehmer den jeweils ausgewählten Service-Provider SP₁ ... SP_{N} nicht mehr benötigt, kann er dies dem Selection-Server SSS mitteilen. Dieser setzt daraufhin in einer Decisonmeldung (DEC) die betroffenen Filter Regeln zurück. Der Erfolg dieser Aktion wird vom Router R ebenfalls mit einer Reportmeldung (RPT) quittiert.

Weiterhin kann der Selection-Server SSS, bei Bedarf oder beim Ausloggen eines Teilnehmers, Vergebührungsdaten vom Router R anfordern. Dieses geschieht über das Setzen einer bestimmten Marke in der Decisionmeldung vom Router an den Selection-Server SSS; daraufhin gibt der Selection-Server SSS die angeforderten Daten in einer Reportmeldung (RPT) zurück.

Die Erfindung wird im wesentlichen für Verbindungsaufbauten (Dial Up Connections) angewendet. Die Erfindung ist jedoch nicht darauf beschränkt. So kann die Erfindung ebenso bei Teilnehmern verwendet werden, deren Verbindungen nicht aufgebaut zu werden brauchen (Non-Dial Connections, Always On Connections). Das Protokoll P läuft dann ebenso in der oben beschriebenen Art und Weise ab.

## Patentansprüche

1. Vorrichtung zum Übertragen von Informationen zum Internet, mit einem Router (R), einem Selection-Server (SSS), der als Schnittstelle zum Internet (I) dient, wobei der Router (R) einen Kommunikationspfad zum Internet aufweist,
**dadurch gekennzeichnet,**
**daß** der Selection-Server (SSS) parallel zum Router (R) angeordnet ist, wodurch er dem Kommunikationspfad zwischen Router (R) und Internet (I) entnommen ist.

2. Vorrichtung nach Anspruch 1,
**dadurch gekennzeichnet,**
**daß** zwischen Router (R) und Selection-Server (SSS) ein Kommunikationsprotokoll (P) ausgetauscht wird.

3. Vorrichtung nach Anspruch 2,
**dadurch gekennzeichnet,**
**daß** das Kommunikationsprotokoll (P) derart ausgebildet ist, daß zwischen Router (R) und Selection-Server (SSS) geeignete Datenstrukturen (Filter Regeln) zur Steuerung des Verhaltens des Routers (R) vorgesehen wird.
